Europäisches Patentamt

European Patent Office

Office européen des brevets

(11) Veröffentlichungsnummer : **0 084 069**
**B1**

(12) **EUROPÄISCHE PATENTSCHRIFT**

(45) Veröffentlichungstag der Patentschrift :
**07.08.85**

(51) Int. Cl.⁴ : **A 47 J 31/54**

(21) Anmeldenummer : **82100268.0**

(22) Anmeldetag : **15.01.82**

(54) **Durchlauferhitzer für Kaffeemaschinen.**

(43) Veröffentlichungstag der Anmeldung :
**27.07.83 Patentblatt 83/30**

(45) Bekanntmachung des Hinweises auf die Patenterteilung : **07.08.85 Patentblatt 85/32**

(84) Benannte Vertragsstaaten :
**AT BE CH DE FR GB IT LI LU NL SE**

(56) Entgegenhaltungen :
**FR-A- 2 181 906**

(73) Patentinhaber : **INTROPA TRADING SA**
**Ave. Justo Arosemena y Calle 31, No. 3-80 P.O. Box 7412**
**Panama 5 (PA)**

(72) Erfinder : **Der Erfinder hat auf seine Nennung verzichtet**

(74) Vertreter : **Patentanwälte Grünecker, Dr. Kinkeldey, Dr. Stockmair, Dr. Schumann, Jakob, Dr. Bezold, Meister, Hilgers, Dr. Meyer-Plath**
**Maximilianstrasse 58**
**D-8000 München 22 (DE)**

## Beschreibung

Die Erfindung bezieht sich auf einen Durchlauferhitzer für eine Kaffeemaschine nach dem Oberbegriff des Anspruchs 1 und eine Kaffeemaschine mit einem solchen Durchlauferhitzer.

Moderne elektrisch beheizte Kaffeemaschinen bedienen sich üblicherweise eines etwa hufeisenförmigen elektrischen Heizkörpers, an den möglichst eng angeschmiegt ein das zu erhitzende Wasser führendes Metallrohr angeordnet ist. Dieser Durchlauferhitzer liegt normalerweise unter einem Kaltwasserbehälter der Kaffeemaschine und steht über einen Verbindungsschlauch mit dem Kaltwasserbehälter in Verbindung. An den Brühwasseranschluß des Durchlauferhitzers ist eine Brühwasserführung angeschlossen, deren Auslauf höhenmäßig über dem Höchststand des Wassers im Kaltwasserbehälter liegt und das Brühwasser in einen Behälter mit Kaffeepulver ergießt. Im Verbindungsschlauch zwischen dem Kaltwasserbehälter und dem Wassereinlauf des Durchlauferhitzers liegt ein Rückschlagventil, das Frischwasser ungehindert zum Durchlauferhitzer durchläßt, aber jeden Rückfluß von Heißwasser sperrt, sobald sich durch das unter Dampfentwicklung nach oben ausgestoßene Brühwasser ein Gegendruck auf das Ventil ausbildet. Dieser Gegendruck hört spätestens dann auf, wenn alles Brühwasser aus dem Durchlauferhitzer ausgestoßen ist, wodurch das Ventil wieder öffnet und neues Frischwasser in das dem Heizkörper benachbarte Rohr einfließen läßt, das erneut zum Kochen gebracht wird, wodurch erneut Brühwasser ausgestoßen wird. Abgesehen von der nicht ganz angenehmen, an ein Schnarchen erinnernden Geräuschbildung, weisen diese bekannten Durchlauferhitzer den erheblichen Nachteil auf, daß sie durch die diskontinuierliche Arbeitsweise und den damit verbundenen starken Temperaturanstieg am Ende eines Ausstoßzyklusses sehr schnell verkalken und dann unter erhöhter Geräuschemission sehr viel Dampf entwickeln, noch stärker verkalken und bald nicht mehr funktionsfähig sind.

Die FR-A 21 81 906 beschreibt einen Durchlauferhitzer der obigen Art, bei dem die rasche Verkalkung im wesentlichen dadurch bedingt ist, daß die Brühwasserkammer sich am Ende jedes Zyklusses vollständig entleert und jeder Rest von verdampftem Brühwasser Kalk zurückläßt.

Der vorliegenden Erfindung liegt die Aufgabe zugrunde, einen Durchlauferhitzer der obigen Art anzugeben, der eine geringere Geräuschemission und Dampfbildung aufweist.

Die obige Aufgabe wird ausgehend von einem Durchlauferhitzer nach dem Oberbegriff des Anspruchs 1 durch dessen kennzeichnende Merkmale gelöst.

Im Gegensatz zu bekannten Durchlauferhitzern wird bei dem vorliegenden Durchlauferhitzer die Brühwasserkammer durch die darin entstehende Dampfbildung nicht vollständig entleert, sondern vor dem vollständigen Ausstoßen des Brühwassers bereits wieder mit nachfließendem Frischwasser vermischt. Dies wird dadurch erreicht, daß der Wasserzulaufstutzen relativ lang ausgebildet ist und auf einer Temperatur gehalten wird, die das darin befindliche Wasser nicht zum Kochen bringt. Da auf der Brühwasserauslaßseite der Druck nach anfänglichem Brühwasserausstoß bereits zu einem Zeitpunkt abfällt, als sich noch restliches Brühwasser in der Brühwasserkammer befindet und in dem sich unmittelbar an die Brühwasserkammer anschließenden Wasserzulaufstutzen noch nicht kochendes Wasser zur Verfügung steht, vermischt sich das restliche Brühwasser in der Brühwasserkammer mit dem aus dem Wasserzulaufstutzen nachrückenden Frischwasser, wodurch die Temperatur des Wassers in der Brühwasserkammer wieder unter den Siedepunkt abfällt und der Zyklus von neuem beginnt. Da die Minimaltemperatur des Wassers in der Brühwasserkammer durch die hohe Menge Restwasser relativ hoch liegt, erreicht das Wasser schnell wieder die Siedetemperatur, wodurch die Zykluszeit stark verkleinert wird und der gesamte Vorgang zwar immer noch intermittierend abläuft, aber bereits stark an den kontinuierlichen Durchlauf angenähert ist. Dadurch wird sowohl die Geräuschemission als auch die Verkalkung stark herabgesetzt.

Durch die im Anspruch 2 angegebene symmetrische Ausbildung des gesamten Durchlauferhitzers wird erreicht, daß der Wasserzulauf an jedes der beiden Rohrenden angeschlossen werden kann. Man braucht deshalb für verschiedene Maschinentypen keine unterschiedlichen Durchlauferhitzer herzustellen.

Durch die Merkmale der Ansprüche 3 bis 5, die auf einen möglichst ungehinderten Strömungsverlauf in der Brühwasserkammer abzielen, wird einer möglichen Verkalkung ebenfalls entgegengewirkt.

Bei der Montage des angegebenen Durchlauferhitzers in einer Kaffeemaschine hat es sich als sehr günstig herausgestellt, den Durchlauferhitzer, wie in den Ansprüchen 6 bis 8 angegeben, zu neigen. Dadurch wird erreicht, daß das im Wasserzulaufkanal befindliche Wasser nicht schon während des Brühwasserausstoßvorgangs in die Brühwasserkammer fließt, sondern erst zu einem definierten Zeitpunkt, bei dem der auf das Ventil wirkende Druck auf Null abgesunken ist, dann aber in genügender Menge zur Verfügung steht, um sich mit dem restlichen Brühwasser in der Brühwasserkammer zu mischen.

Anhand eines in der Zeichnung dargestellten Ausführungsbeispiels wird die Erfindung im folgenden näher erläutert. Es zeigen:

Figur 1 eine Draufsicht des erfindungsgemäßen Durchlauferhitzers;

Figur 2 bis Figur 4 verschiedene Schnittansichten des Durchlauferhitzers nach Figur 1 entlang den Linien II-II (Figur 2), III-III (Figur 3) und IV-IV (Figur 4).

Der in der Zeichnung im Maßstab 1 : 1 dargestellte Durchlauferhitzer weist ein Metallgußstück 1 auf, das ein etwa halbkreisförmiges Bodenteil besitzt, an das sich den Halbkreis zu einer U-Form ergänzend, zur Mittelachse spiegelsymmetrisch zwei Verlängerungen 3a und 3b anschließen. Am äußeren Rand des Bodenteils 2 entlang läuft ein senkrecht abstehender äußerer Randflansch 4, dem ein dazu paralleler innerer Flansch 5 zugeordnet ist. Zwischen den U-Schenkeln des inneren Flansches 5 und der Begrenzung des halbkreisförmigen Bodenteils 2 verläuft ein Querflansch 6, der in seinen den U-Schenkeln des inneren Flansches 5 benachbarten Bereichen Öffnungen 7a und 7b aufweist, an die sich jeweils ein Wasserführungsstutzen 8a und 8b anschließt. Zwischen den Öffnungen 7a und 7b ragt in den durch den Querflansch 6 und den inneren Flansch 5 begrenzten Bereich ein Formteil 10 hinein, dessen Berandung etwa konzentrisch zum halbkreisförmigen Teil des inneren Flansches 5 ausgebildet ist. Auf diesem halbkreisförmigen Teil des inneren Flansches 5, dem Querflansch 6 und dem Formteil 10 liegt ein aufgepreßter oder aufgeleimter Deckel 11. Die Wasserzuführungsstutzen 8a und 8b sind durch Querstege 12, 13 und 14 verbunden, in denen Befestigungsöffnungen 15 ausgebildet sind. Auf dem Wasserführungsstutzen 8a und 8b sind Aufnahmeflansche ausgebildet, die zur Aufnahme eines Überlastungsschutzschalters dienen. In dem Raum zwischen dem äußeren Randflansch 4 und dem inneren Flansch 5 liegt ein U-förmiger Heizkörper 17, der dort entweder eingepreßt oder eingeklebt ist.

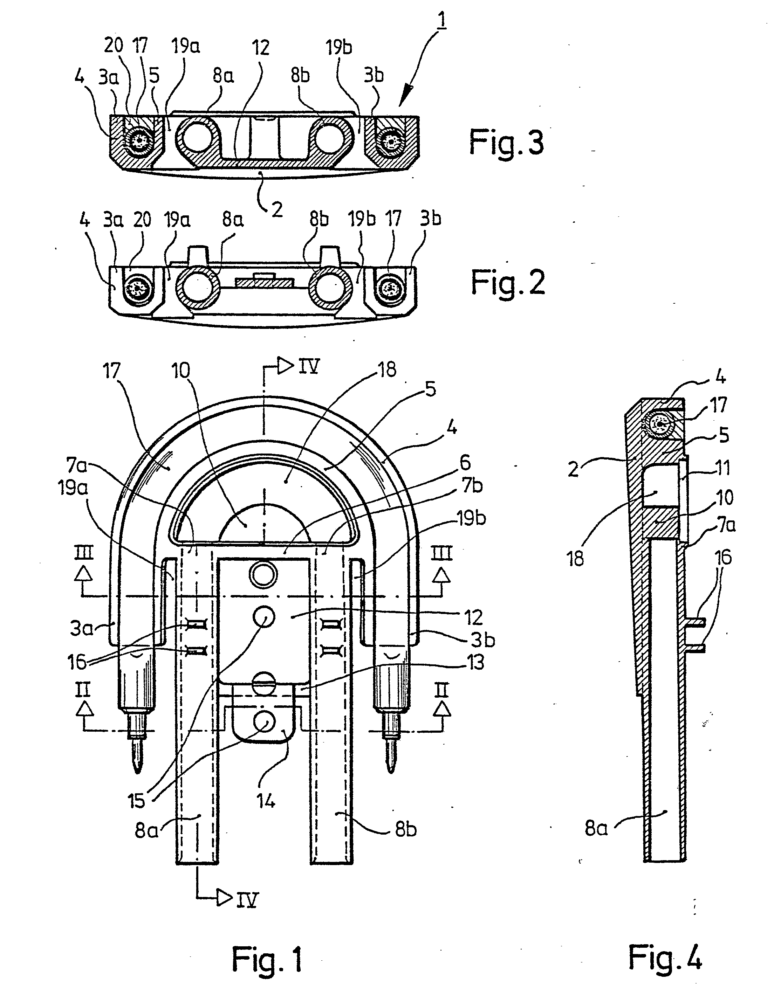

Das Bodenteil 2 ist, wie sich aus Figur 4 gut ersehen läßt, zum Fußpunkt der U-Form mit zunehmender Bodenstärke ausgebildet. Durch diese zunehmende Bodenstärke, die in einem Winkel von 2° ausgebildet ist, wird erreicht, daß die Wasserführungsstutzen 8a, 8b und die unter dem Deckel 11 befindliche Brühwasserkammer 18 bei ebener Montage eine leichte Neigung erhalten, deren Funktion weiter unten noch erläutert wird. Alle Berandungen der Brühwasserkammer 18 sind, wie sich am besten aus Figur 4 ersehen läßt, deutlich gerundet, um in diesen Bereichen einer etwaigen Kalkablagerung entgegenzuwirken.

Zwischen dem durch den Wasserzuführungsstutzen 8a gebildeten Wasserzulaufkanal und dem ihm benachbart liegenden Teil des Heizkörpers 17 ist ein bis an den Querflansch 6 heranreichender Luftspalt 19a ausgebildet, der als Wärmeisolierung zwischen dem Wasserzuführungsstutzen 8a und dem Heizkörper 17 dient. Ein gleicher Luftspalt 19b liegt auch zwischen dem Wasserablaufstutzen 8b und dem dazu benachbarten Teil des Heizkörpers 17, obwohl er dort zur Wärmeisolierung nicht erforderlich wäre. Durch diese symmetrische Ausbildung können der Wasserzuführungs- und -ablaufstutzen 8a und 8b jedoch miteinander vertauscht werden.

Der in Figur 1 linke Wasserzuführungsstutzen 8a steht über eine ein Ventil enthaltende Schlauchverbindung mit einem Frischwasserbehälter in Verbindung. Der rechte Wasserführungsstutzen 8b führt das Brühwasser ab. In der Brühwasserkammer 18 wird das Wasser zum Kochen gebracht und durch den entstehenden Dampf über den Wasserablaufstutzen 8b ausgestoßen. Da nur die Wände der Brühwasserkammer 18 in engem, wärmeleitenden Kontakt mit dem Heizkörper 17 stehen und nicht auch der Wasserzuführungsstutzen 8a und in dem relativ lang ausgebildeten Wasserzuführungsstutzen 8a genügend Frischwasser steht, tritt in dem Wasserzuführungsstutzen 8a keine Dampfbildung auf, so daß sich dort kein Kalk absetzt. Durch die unter der Siedetemperatur liegende Temperatur des Wassers im Wasserzuführungsstutzen 8a ist außerdem sichergestellt, daß eine genügende Restmenge Wasser in der Brühwasserkammer 18 verbleibt (die ansonsten durch Dampfbildung im Wasserzuführungsstutzen mit ausgestoßen würde), so daß sich am Ende eines Zyklusses eine ausreichende Restmenge Brühwasser durch schnellen Zufluß des noch gefüllten Wasserzuführungsstutzens 8a mit Frischwasser bzw. mäßig angewärmtem Frischwasser vermischen kann. Durch die geneigte Anordnung des Wasserzuführungsstutzens 8a wird sichergestellt, daß die darin befindliche Wassermenge erst am Ende eines Zyklusses, wenn sich das Ventil öffnet, in die Brühwasserkammer 18 fließt und sich dann, da es in ausreichender Menge zur Verfügung steht, mit der Restmenge Wasser in der Brühwasserkammer 18 vermischt. Durch das Vermischen von Frischwasser mit der Restmenge Brühwasser in der Brühwasserkammer 18 wird gewährleistet, daß sich in der Brühwasserkammer 18 praktisch kein Kalk absetzt. Der Kalkablagerung wirken auch die gerundeten Ecken der Brühwasserkammer 18 und das in die Brühwasserkammer 18 hineinragende Formteil 10 entgegen, da durch diese Formgebung ein weitgehend wirbelfreier Durchlauf des Wassers erreicht wird.

In dem dargestellten Ausführungsbeispiel weist der Wasserzuführungsstutzen 8a eine deutlich über das Ende des Heizkörpers 17 überstehende Länge auf. Die Gesamtlänge des Wasserzuführungsstutzens 8a beträgt das etwa 1,3 fache der mittleren Weglänge, die das Wasser durch die Brühwasserkammer 18 nehmen muß oder etwa das 2fache des Durchmessers der Brühwasserkammer 18. Durch diese relativ große Länge des Wasserzuführungsstutzens 8a wird, wie oben bereits ausgeführt, die gewünschte kontinuierliche Erwärmung des zulaufenden Frischwassers begünstigt und eine übermäßige Dampfbildung verhindert.

Die oben bereits angesprochenen Befestigungsöffnungen 15 und Aufnahmeflansche 16 dienen zur Aufnahme eines Temperaturregelschalters für eine Warmhalteplatte der Kaffeemaschine und eines auf dem Wasserzuführungsstutzen 8a anzuordnenden Überlastungsschutzschalters.

**Patentansprüche**

1. Durchlauferhitzer für eine Kaffeemaschine, bestehend aus einem Metallgußstück (1), das ein im wesentlichen ebenes Bodenteil (2) aufweist, an dessen Berandung eine im Querschnitt U-förmige Aufnahmerinne (4, 5) ausgebildet ist, in der ein im wesentlichen U-förmiger elektrischer Heizkörper (17) liegt, und einer im Bereich des Fußpunkts der U-Form des Heizkörpers (17) ausgebildeten Brühwasserkammer (18), in die benachbart zu den U-Schenkeln des Heizkörpers (17) angeordnete Anschlußstutzen (8a, 8b), für den Wasserzulauf und Wasserablauf münden, wobei der Wasserzulaufstutzen (8a) über den überwiegenden Teil seiner Länge durch einen Wärmewiderstand gegenüber dem benachbart dazu liegenden Ende des Heizkörpers (17) wärmeisoliert ist, dadurch gekennzeichnet, daß der Wasserzulaufstutzen (8a) eine Länge aufweist, die wenigstens das 1,3fache der mittleren Weglänge des Wasserlaufs durch die Brühwasserkammer (18), vorzugsweise das 2fache des Durchmessers der Brühwasserkammer (18), beträgt.

2. Durchlauferhitzer nach Anspruch 1 dadurch gekennzeichnet, daß er symmetrisch zu seiner Mittellinie ausgebildet ist.

3. Durchlauferhitzer nach Anspruch 1 oder 2, dadurch gekennzeichnet, daß der Innenraum der Brühwasserkammer (18) als halbringförmiger Strömungskanal ausgebildet ist.

4. Durchlauferhitzer nach einem der Ansprüche 1 bis 3 dadurch gekennzeichnet, daß die durch die aneinanderstoßenden Wände der Brühwasserkammer (18) gebildeten Kanten abgerundet sind.

5. Durchlauferhitzer nach einem der Ansprüche 1 bis 4 dadurch gekennzeichnet, daß die Brühwasserkammer (18) einen im wesentlichen ebenen Deckel (11) aufweist.

6. Kaffeemaschine mit einem Durchlauferhitzer nach einem der Ansprüche 1 bis 5, dadurch gekennzeichnet, daß der Durchlauferhitzer derart geneigt angeordnet ist, daß der Fußpunkt seiner U-Form höher zu liegen kommt, als die Enden der Anschlußstutzen (8a, 8b).

7. Kaffeemaschine nach Anspruch 6, dadurch gekennzeichnet, daß der Neigungswinkel zwischen 1,5° und 4°, vorzugsweise bei 2°, liegt.

8. Kaffeemaschine nach Anspruch 6 oder 7, dadurch gekennzeichnet, daß zum Erreichen des gewünschten Neigungswinkel das Bodenteil (2) des Metallgußstückes (1) mit zum Fußpunkt der U-Form zunehmender Dicke ausgebildet ist.

**Claims** —

1. An instantaneous water heater for a coffee maker, the heater comprising : a metal casting (1) having a substantially plane bottom part (2) formed on its edge with a channel-section groove (4, 5) receiving a substantially U-shaped electric heating element (17) ; and a water-heating chamber (18) which is disposed near the lowest part of the U-shape of the heating element (17) and into which water inlet and outlet ducts (8a, 8b) extend adjacent the U-arms of the heating element (17), the water inlet water duct (8a) being thermally insulated over most of its length from the nearby end of the heating element (17) by a heat insulant, characterised in that the water inlet duct (8a) is of a length which is at least 1.3 times the average distance travelled by the water through the water-heating chamber (17) and is preferably twice the diameter thereof.

2. A heater according to claim 1, characterised in that it is devised symmetrically of its centreline.

3. A heater according to claim 1 or 2, characterised in that the interior of the water-heating chamber (18) is a flow channel in the form of a half-annulus.

4. A heater according to any of claims 1 to 3, characterised in that the edges formed by the abutting walls of the water-heating chamber (18) are rounded.

5. A heater according to any of claims 1 to 4, characterised in that the water-heating chamber (18) has a substantially plane cover (11).

6. A coffee maker having an instantaneous water heater according to any of claims 1 to 5, characterised in that the heater is disposed at an inclination such that the lowest part of its U-shape is higher than the ends of the inlet and outlet ducts (8a, 8b).

7. A coffee maker according to claim 6, characterised in that the angle of inclination is between 1.5° and 4°, preferably 2°.

8. A coffee maker according to claim 6 or 7, characterised in that to provide the required angle of inclination the bottom part (2) of the metal casting (1) is of a thickness which increases towards the lowest part of the U-shape.

**Revendications**

1. Chauffe-eau instantané équipant une machine à café et comprenant une pièce métallique (1) venue de coulée, qui présente un fond (2) sensiblement plan et sur la bordure duquel est élaborée une gorge réceptrice (4, 5) de section en U dans laquelle est logé un corps électrique chauffant (17) sensiblement configuré en U, ainsi qu'un compartiment (18) à eau bouillante qui est ménagé dans la région de la base de la configuration en U du corps chauffant (17) et dans lequel débouchent, au voisinage des branches du U du corps chauffant (17), des raccords (8a, 8b) pour l'admission d'eau et l'évacuation d'eau, le raccord (8a) d'admission d'eau étant isolé thermiquement sur la partie prépondérante de sa longueur, par l'intermédiaire d'une résistance thermique, par rapport à l'extrémité du corps chauffant (17) qui lui est voisine, caractérisé par le fait que le raccord (8a) d'admission d'eau présente une longueur correspondant au moins à 1,3 fois la longueur moyenne du trajet parcouru par l'eau à travers le compartiment (18) à eau bouillante, de préférence au double du diamètre de ce compartiment (18) à eau bouillante.

2. Chauffe-eau instantané selon la revendication 1, caractérisé par le fait qu'il est réalisé symétrique par rapport à son axe médian.

3. Chauffe-eau instantané selon la revendication 1 ou 2, caractérisé par le fait que l'espace interne du compartiment (18) à eau bouillante est réalisé en tant que canal de circulation de forme semi-annulaire.

4. Chauffe-eau instantané selon l'une des revendications 1 à 3, caractérisé par le fait que les arêtes, formées par les parois du compartiment (18) à eau bouillante se rencontrant mutuellement, sont arrondies.

5. Chauffe-eau instantané selon l'une des revendications 1 à 4, caractérisé par le fait que le compartiment (18) à eau bouillante présente un couvercle (11) sensiblement plan.

6. Machine à café munie d'un chauffe-eau instantané selon l'une des revendications 1 à 5, caractérisée par le fait que ce chauffe-eau est disposé selon une inclinaison telle que la base de sa configuration en U se trouve plus haut que les extrémités des raccords (8a, 8b).

7. Machine à café selon la revendication 6, caractérisée par le fait que l'angle d'inclinaison mesure entre 1,5° et 4°, de préférence 2°.

8. Machine à café selon la revendication 6 ou 7, caractérisée par le fait que, pour atteindre l'angle d'inclinaison souhaité, le fond (2) de la pièce métallique (1) venue de coulée est réalisé d'épaisseur croissante en direction de la base de la configuration en U.

Fig.3

Fig.2

Fig.1

Fig.4